# FASCICULE DE BREVET EUROPEEN

(11) **EP 4 389 529 B1**
(45) Date de publication et mention de la délivrance du brevet: **27.08.2025**
(21) Numéro de dépôt: 23213873.5
(22) Date de dépôt: 04.12.2023
(51) Int. Cl.: B60R 13/02, B60H 1/22

(54) **PIÈCE DE GARNITURE INTÉRIEURE DE VÉHICULE ET SON PROCÉDÉ DE FABRICATION**
FAHRZEUGINNENVERKLEIDUNGSTEIL UND VERFAHREN ZU SEINER HERSTELLUNG
VEHICLE INTERIOR TRIM PART AND METHOD FOR MANUFACTURING SAME

(30) Priorité: 22.12.2022 FR 2214271
(43) Date de publication de la demande: 26.06.2024
(73) Titulaire: SMRC Automotive Holdings Netherlands B.V., 1101 BA Amsterdam (NL)
(72) Inventeur: SAELEN, Marc, 59251 ALLENNES LES MARAIS (FR)
(74) Mandataire: Ipsilon Strasbourg

(56) Documents cités:
- WO-A1-2006/076129
- DE-A1- 102012 021 887
- FR-A1- 3 116 474
- FR-A1- 3 116 489
- US-A- 4 957 797

## Description

La présente invention concerne le domaine des équipements intérieurs dans les véhicules, en particulier les pièces de garniture intérieure. Elle a pour objet une pièce de garniture intérieure de véhicule et son procédé de fabrication.

Les pièces de garniture (ou d'habillage) comprennent notamment, de manière non limitative, les tableaux de bord, les panneaux de portières, les panneaux de console centrale, les montants de fenêtres, les pièces d'ébénisterie analogues.

Parmi les pièces de garniture, certaines intègrent, en s'étendant dans le corps même de ces dernières, des éléments fonctionnels assurant des fonctions spécifiques telles que, par exemple, le chauffage, l'éclairage, la détection, la mesure, la réception, la transmission. Pour permettre leur activation ou fonctionnement, ces éléments fonctionnels nécessitent généralement une connexion à une source d'énergie électrique ou à un dispositif électronique lui-même alimenté ou comprenant une source d'énergie électrique. Un tel dispositif électronique permet de fournir de l'énergie et ou de transmettre des informations à l'élément fonctionnel et/ou de traiter les informations/données générées et émises par l'élément fonctionnel.

Les pièces de garniture intégrant de telles fonctions fournissent ainsi des services utiles aux utilisateurs (conducteurs et/ou passagers) de véhicules et améliorent leur confort.

Une telle pièce de garniture présente une face apparente (ou exposée) visible par les occupants du véhicule et une structure surfacique fine. La pièce de garniture comprend une couche support non visible, une couche d'habillage (ou décorative) comportant ladite face apparente et au moins un élément fonctionnel situé entre la couche support et la couche d'habillage. Le ou chaque élément fonctionnel ainsi interposé (ou pris en sandwich) entre lesdites couches support et d'habillage s'étend sur tout ou partie de leurs surfaces en étant en contact avec ces dernières. Dans le cas où plusieurs éléments fonctionnels sont prévus, chaque élément fonctionnel forme, selon son étendue surfacique, un point ou une surface fonctionnelle.

L'élément fonctionnel est intégré dans la pièce de garniture durant sa fabrication et est interposé entre les couches support et d'habillage en étant positionné aussi près que possible de la face apparente afin de fournir les propriétés d'interaction les plus efficaces avec l'intérieur du véhicule et ses occupants. Par ailleurs, l'élément fonctionnel est positionné de sorte à pouvoir être aisément connecté à une source d'alimentation électrique ou à un dispositif électrique/électronique lors de l'installation de la pièce de garniture dans le véhicule.

Le document FR3074567 divulgue une telle pièce de garniture en ayant pour objet un panneau radiant à trois couches destiné à disposer à l'intérieur d'un habitacle de véhicule, par exemple automobile, et remplissant une fonction de chauffage. Il comprend à cet effet au moins trois couches empilées pouvant chacune comprendre une pluralité de sous couches et/ou de nappes. La deuxième couche est mince et génératrice d'un rayonnement et comprend à cet effet au moins un élément chauffant et au moins deux électrodes pour alimenter ce dernier. L'élément chauffant comprend notamment une couche de peinture acrylique comprenant des particules de carbone et/ou des particules métalliques qui émettent de la chaleur sous l'effet de l'alimentation électrique fournie à l'élément chauffant par deux électrodes connectées à la couche de peinture. La troisième couche est orientée vers l'habitacle (plus particulièrement vers un utilisateur du véhicule) et forme une couche d'habillage conférant un aspect esthétique au panneau dans l'habitacle. La première couche est uniquement en contact avec la deuxième couche et la troisième couche est uniquement en contact avec la deuxième couche. Dans une alternative, la première couche est en contact avec la troisième couche autour du périmètre de la deuxième couche.

Toutefois, une pièce de garniture telle que celle divulguée dans le document FR3074567 présente plusieurs inconvénients. Tout d'abord, elle ne permet pas de positionner localement, c'est à dire en un point précis par rapport à la surface de la pièce de garniture, un élément chauffant puisque l'élément chauffant est constitué par une couche de peinture contenant une pluralité de particules chauffantes. D'autre part, le coût est élevé du fait de la pluralité de particules noyés ou encastrés dans la matière et sur toute la surface de la deuxième couche étalée entre les première et troisième couches. En outre, une telle pièce de garniture, tout comme d'autres pièces telles que celles divulguées dans le document DE102015220253 font appel à au moins deux pièces de connexion spécifiques et séparées qui génèrent une discontinuité structurelle et mécanique dans cette couche et le raccordement, par exemple des électrodes à la couche de peinture, génère des pertes impactant le rendement énergétique. Le document FR3116474A1 divulgue une pièce de garniture d'après le préambule de la revendication 1.

La présente invention a pour but de pallier ces inconvénients.

A cet effet, la présente invention a pour objet une pièce de garniture intérieure pour véhicule, ladite pièce de garniture présentant une forme tridimensionnelle et comprenant, d'une part, une structure multicouches comportant une couche support présentant deux faces opposées, à savoir une face externe et une face interne et une couche d'habillage rapportée et présentant deux faces opposées, à savoir une face externe définissant une face apparente de la pièce de garniture et une face interne tournée vers la face interne de la couche support et, d'autre part, au moins un élément fonctionnel, de préférence d'épaisseur fine, comprenant une partie fonctionnelle d'extension surfacique disposée entre la couche support et la couche d'habillage, la structure multicouches comportant en outre une couche de liaison interposée entre la couche support et la couche d'habillage en étant fixée sur les faces internes de ces dernières de sorte à les assembler/lier entre elles, au moins la partie fonctionnelle du ou d'au moins l'un des élément(s) fonctionnel(s) étant disposée et maintenue localement entre la couche d'habillage et la couche support en étant située à l'extérieur de la couche de liaison, se caractérisant en ce que la partie fonctionnelle se prolonge de manière continue par une partie allongée de connexion ou de raccordement permettant son alimentation électrique et/ou la transmission de signaux électriques et en ce que la partie allongée de connexion ou de raccordement du ou d'au moins l'un des élément(s) fonctionnel(s) traverse l'épaisseur de la couche support au-delà de sa face externe en étant noyée dans ou enrobée par la couche support.

La présente invention a également pour objet un procédé de réalisation d'une pièce de garniture intérieure pour véhicule, ladite pièce de garniture présentant une forme tridimensionnelle et comprenant, d'une part, une structure multicouches comportant une couche support présentant deux faces opposées, à savoir une face externe et une face interne et une couche d'habillage rapportée et présentant deux faces opposées, à savoir une face externe définissant une face apparente de la pièce de garniture et une face interne tournée vers la face interne de la couche support et, d'autre part, au moins un élément fonctionnel, de préférence d'épaisseur fine, comprenant une partie fonctionnelle d'extension surfacique disposée entre la couche support et la couche d'habillage et se prolongeant de manière continue par une partie allongée de connexion ou de raccordement permettant son alimentation électrique et/ou la transmission de signaux électriques, la structure multicouches comportant en outre une couche de liaison interposée entre la couche support et la couche d'habillage en étant fixée sur les faces internes de ces dernières de sorte à les assembler/lier entre elles, au moins la partie fonctionnelle du ou d'au moins l'un des élément(s) fonctionnel(s) étant disposée et maintenue localement entre la couche d'habillage) et la couche support en étant située à l'extérieur de la couche de liaison, se caractérisant en ce qu'il consiste à réaliser les étapes suivantes, en utilisant un moule d'injection comprenant deux parties mobiles l'une par rapport à l'autre, à savoir une première partie pourvue de moyens d'injection d'une matière destinée à former la couche support et une deuxième partie permettant de fermer le moule :
- fournir au moins un élément fonctionnel,
- mettre en place le ou chaque élément fonctionnel dans le moule en le maintenant dans une position prédéterminée dans la première partie du moule,
- fermer le moule de manière à former une chambre d'injection et à injecter dans cette dernière un matériau destiné à former la couche support de sorte à fixer au moins la partie fonctionnelle du ou de chaque élément fonctionnel sur la surface de la couche support destinée à former sa face interne dans la pièce de garniture,
- ouvrir le moule pour démouler et extraire la couche support munie du ou des élément(s) fonctionnel(s), avec la ou leur partie allongée de connexion ou de raccordement traversant le matériau de la couche support,
- fournir une couche d'habillage et la fixer sur la couche support au moyen d'une couche de liaison de sorte que la couche d'habillage recouvre au moins la partie fonctionnelle du ou des éléments fonctionnels et qu'au moins la partie fonctionnelle du ou d'au moins l'un des élément(s) fonctionnel(s) soit située à l'extérieur de la zone occupée par la couche de liaison.

Un tel procédé selon la présente invention se caractérise en ce qu'il consiste à réaliser les étapes suivantes, en utilisant un moule d'injection comprenant deux parties mobiles l'une par rapport à l'autre, à savoir une première partie pourvue de moyens d'injection d'une matière destinée à former la couche support et une deuxième partie permettant de fermer le moule :
- fournir au moins un élément fonctionnel,
- mettre en place le ou chaque élément fonctionnel dans le moule en le maintenant dans une position prédéterminée dans la première partie du moule,
- fermer le moule de manière à former une chambre d'injection et à injecter dans cette dernière un matériau destiné à former la couche support de sorte à fixer au moins la partie fonctionnelle du ou de chaque élément fonctionnel sur la surface de la couche support destinée à former sa face interne dans la pièce de garniture,
- à ouvrir le moule pour démouler et extraire la couche support munie du ou des élément(s) fonctionnel(s), éventuellement avec la ou leur partie allongée de connexion ou de raccordement traversant le matériau de la couche support,
- à fournir une couche d'habillage et à la fixer sur la couche support au moyen d'une couche de liaison de sorte que la couche d'habillage recouvre au moins la partie fonctionnelle du ou des éléments fonctionnels et qu'au moins la partie fonctionnelle du ou d'au moins l'un des élément(s) fonctionnel(s) soit située à l'extérieur de la couche de liaison.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une vue en coupe d'une pièce de garniture selon la présente invention, dans une forme de réalisation de la couche d'habillage recouvrant complètement la couche support,
[Fig. 2] est une vue en coupe d'une pièce de garniture selon la présente invention, dans une forme de réalisation de la couche d'habillage comprenant une couche de confort et recouvrant complètement la couche support,
[Fig. 3] est une vue en coupe d'une pièce de garniture selon la présente invention, dans un mode de réalisation où la couche d'habillage recouvre partiellement la couche support,
[Fig. 4] est une vue en coupe d'une pièce de garniture selon la présente invention, selon une forme de réalisation particulière de la pièce représentée sur la figure 3,
[Fig. 5] est une vue en coupe d'une pièce de garniture selon la présente invention, dans une forme de réalisation particulière de la couche support,
[Fig. 6] est une vue de dessus d'un élément fonctionnel,
[Fig. 7] est une vue en coupe de l'élément fonctionnel représenté sur la figure 6,
[Fig. 8] est une vue en coupe d'un moule d'injection pouvant être utilisé pour mettre en œuvre le procédé selon la présente invention,
[Fig. 9],
[Fig. 10],
[Fig. 11],
[Fig. 12],

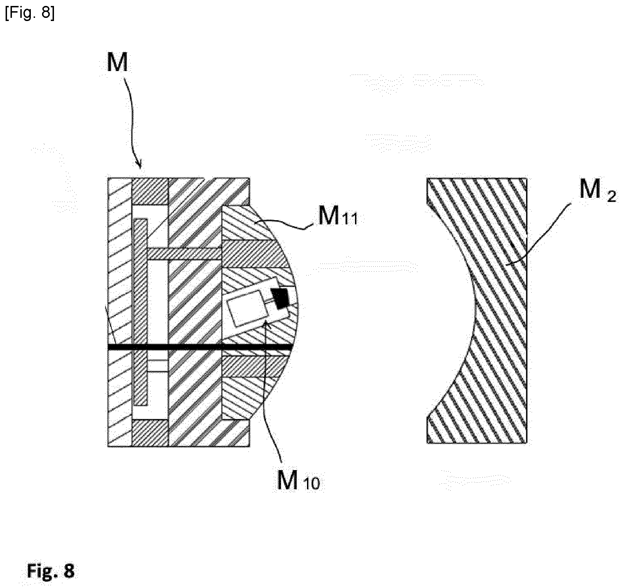

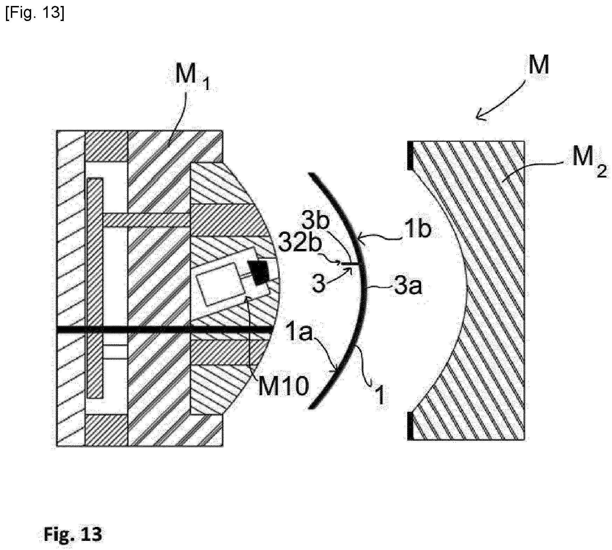

[Fig. 13] montrent le moule représenté sur la figure 8 lors de son utilisation dans les différentes étapes du procédé précédent l'étape de fixation de la couche d'habillage sur la couche support par la couche de liaison, dite dernière étape,

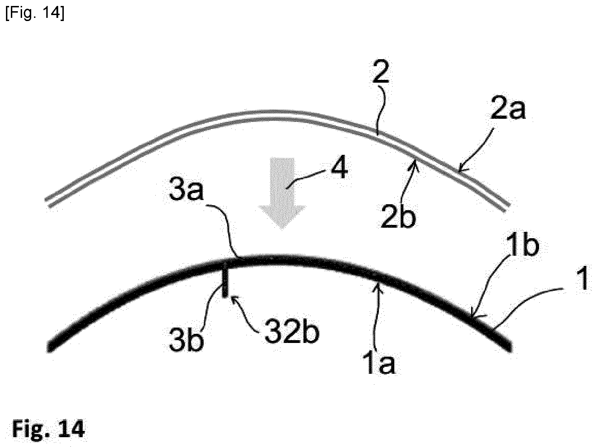

[Fig. 14] illustre la dernière étape du procédé.

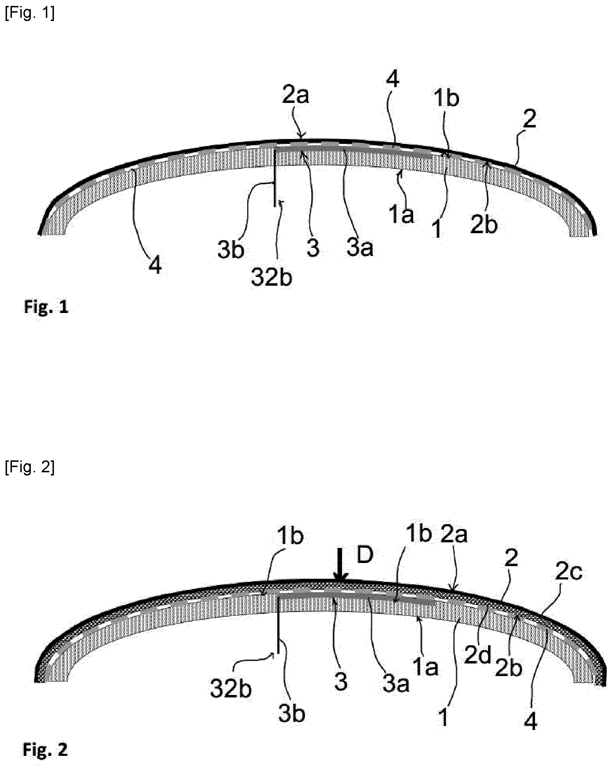

Les figures 1 à 7 montrent une pièce de garniture intérieure, selon la présente invention, pour véhicule, ladite pièce de garniture présentant une forme tridimensionnelle et comprenant :
- une structure multicouches comportant une couche support 1 présentant deux faces opposées, à savoir une face externe 1a et une face interne 1b et une couche d'habillage 2 rapportée et présentant deux faces opposées, à savoir une face externe 2a définissant une face apparente de la pièce de garniture et une face interne 2b tournée vers la face interne 1b de la couche support 1, et
- au moins un élément fonctionnel 3, de préférence d'épaisseur fine, comprenant une partie fonctionnelle 3a d'extension surfacique disposée entre la couche support 1 et la couche d'habillage 2.

La partie fonctionnelle 3 se prolonge de manière continue (c'est-à-dire sans discontinuité électrique due par exemple à un raccordement ou une connexion électrique) par une partie 3b allongée de connexion ou de raccordement permettant son alimentation électrique et/ou la transmission de signaux électriques.

Une telle pièce de garniture (ou d'habillage) peut comprendre, notamment, de manière non limitative, les tableaux de bord, les panneaux de portières, les panneaux de console centrale, les montants de fenêtres, les pièces d'ébénisterie analogues.

Ce prolongement continu de la partie fonctionnelle 3 permet d'éviter une discontinuité structurelle et mécanique dans cette couche et le raccordement, par exemple d'autres éléments, tels que des électrodes générant des pertes impactant le rendement énergétique et venant surenchérir le prix de revient de la pièce de garniture.

Dans une telle pièce de garniture, la structure multicouches comporte (ou comprend) en outre une couche de liaison 4 interposée entre la couche support 1 et la couche d'habillage 2 en étant fixée sur les faces internes 1b, 2b de ces dernières de sorte à les assembler (ou les lier) entre elles.

Plus particulièrement, on comprend que la couche de liaison 4 interposée entre la couche support 1 et la couche d'habillage 2 est fixée solidement ou de manière robuste sur les faces internes 1b, 2b de ces dernières de sorte à les assembler (ou les lier) entre elles pour pouvoir respecter le cahier des charges et les sollicitations d'usage.

On entend par couche rapportée une couche qui n'est pas issue de la fabrication avec la couche support 1, par exemple dans un moule par injection de matière plastique et surmoulage.

La couche de liaison 4 interposée peut s'étendre de manière continue ou discontinue. Dans le cas où elle est discontinue, on comprend que la couche de liaison 4 comporte au moins deux parties de couches de liaison séparées l'une de l'autre entre la couche support 1 et la couche d'habillage 2. Une telle caractéristique permet d'assurer la fixation de la couche support 1 avec la couche d'habillage 2 tout en limitant la surface et la quantité de couche de liaison 4 utilisée. Cette forme de réalisation n'est pas illustrée par les dessins annexés.

Le ou chaque élément fonctionnel 3 peut assurer des fonctions spécifiques telles que, par exemple, le chauffage, l'éclairage, la détection, la mesure, la réception, la transmission. Pour permettre leur activation ou fonctionnement, l'élément fonctionnel 3 peut être connecté, via sa partie 3b allongée de connexion ou de raccordement, à une source d'énergie électrique ou à un dispositif électronique lui-même alimenté ou comprenant une source d'énergie électrique. Un tel dispositif électronique permet de fournir de l'énergie et ou de transmettre des informations à l'élément fonctionnel et/ou de traiter les informations/données générées et émises par l'élément fonctionnel 3.

Au moins la partie fonctionnelle 3a du ou d'au moins l'un des élément(s) fonctionnel(s) 3 est disposée et maintenue localement entre la couche d'habillage 2 et la couche support 1 en étant située à l'extérieur la couche de liaison 4. Cette caractéristique permet de disposer localement, indépendamment des autres couches, en un ou plusieurs points précis de la surface ou du volume de la pièce de garniture, un ou plusieurs élément(s) fonctionnel(s) 3. On entend par « à l'extérieur » une disposition où (au moins) la partie fonctionnelle 3a du ou d'au moins l'un des élément(s) fonctionnel(s) 3 n'est pas située, ou ne s'étend pas, dans ou à l'intérieur de la couche de liaison 4, c'est-à-dire dans la matière, ou l'épaisseur de matière, de la couche de liaison 4, mais est située, ou s'étend, entièrement ou dans sa majeure partie, à l'extérieur de la couche de liaison 4.

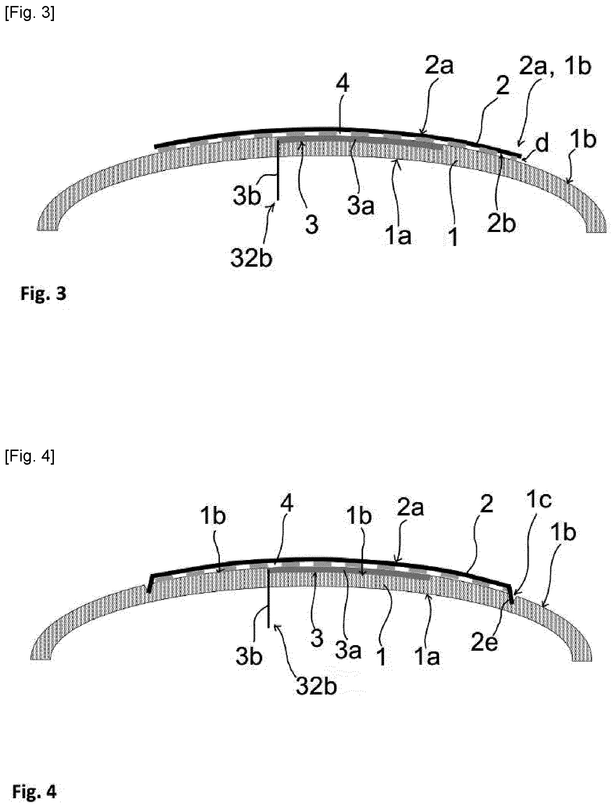

La couche d'habillage 2 peut recouvrir complètement (figure 1) ou partiellement (figures 3 et 4) la couche support 1. Dans le cas d'un recouvrement partiel, les surfaces respectives visibles ou exposées des deux couches 1, 2 forment alors la face apparente 2a, 1b de la pièce de garniture. On comprend alors qu'une partie (non recouverte par la couche d'habillage 2) de la face interne 1b de la couche support 1 forme alors, avec la face externe 2a de la couche d'habillage 2, une partie de la face apparente (ou visible) de la pièce de garniture. Dans ce cas il peut y avoir un décalage entre ces surfaces au niveau de la face apparente 2a, 1b, avec désaffleurement d, du également à la présence de la couche de liaison 4 interposée entre les deux couches 1, 2 et ajoutant une épaisseur. Dans ce cas du recouvrement partiel, la face apparente 2a de la couche d'habillage 2 peut être en dénivelé positif (figures 3 et 4) ou négatif ou au même niveau par rapport à la face visible (ou surface d'aspect) de la couche support 1. Dans le cas d'un dénivelé négatif (non représenté sur les figures annexées), la face interne 1b de la couche support 1 peut comporter un logement (ou un creux) recevant la couche d'habillage 2 dans toute son épaisseur. Un tel logement peut également être prévu avec un dénivelé positif, dans ce cas une partie seulement de l'épaisseur de la couche d'habillage 2 s'étend dans le dans le logement et l'autre partie à l'extérieur.

Dans une variante du cas où la couche d'habillage 2 recouvre partiellement la couche support 1, comme on peut le voir sur la figure 4, la périphérie de la couche d'habillage 2 peut être matérialisée dans la couche support 1 par un aménagement, ou une caractéristique géométrique, 1c linéaire en forme de creux, par exemple du type gorge, pratiqué(e) dans la face interne 1a de la couche support 1 et recevant au moins le bord périphérique de la couche d'habillage 2. Ainsi, cet aménagement ou caractéristique géométrique 1c suit un chemin en périphérie de la couche d'habillage 3 en délimitant la zone de la surface de la couche support 1 recouverte par la couche d'habillage 3.

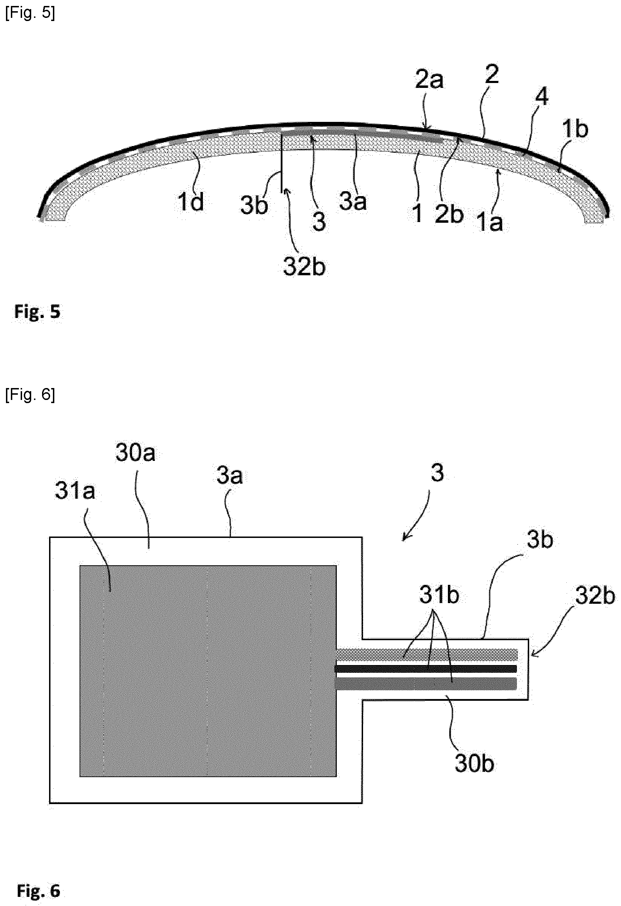

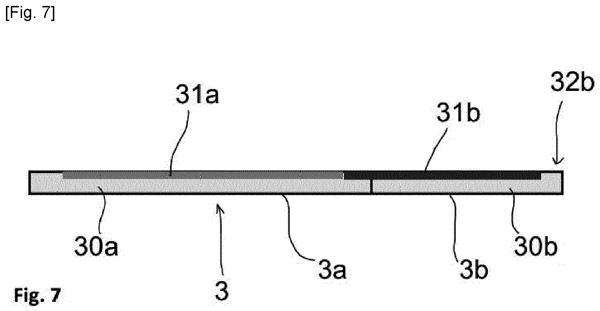

Si on se réfère maintenant, notamment, aux figures 6 et 7, on peut voir que la partie 3a fonctionnelle peut comprendre une partie 30a support d'extension surfacique portant ou intégrant au moins un composant 31a électrique ou électronique réalisant la fonction visée (voir plus haut les fonctions pouvant par exemple être assurées) lorsqu'il est activé ou alimenté électriquement. La partie 3b de connexion ou de raccordement, de préférence de forme allongée, peut comprendre une partie support 30b portant ou intégrant une ou plusieurs lignes ou bande 31b conductrices d'alimentation ou de transmission et une partie de connexion 32b d'extrémité (ou terminale) pour son raccordement électrique.

De préférence, on peut voir sur la figure 5 que la présente invention peut prévoir que la couche support 1 présente une structure alvéolaire intégrant, par exemple, des bulles d'air 1d encapsulées permettant d'obtenir une conductivité thermique de la couche support 1 plus faible que celle de couche de la couche d'habillage 2. On peut ainsi obtenir une isolation thermique en direction de la face externe 1a de la couche support 1 et une meilleure diffusion de la chaleur ou des rayonnements thermiques généré(e)(s) vers la couche d'habillage (2), et donc vers la face apparente 2a et l'espace interne du véhicule. Une telle caractéristique est plus particulièrement intéressante lorsque l'élément fonctionnel 3 réalise une fonction de chauffage.

De préférence, la couche de liaison 4 est réalisée à partir d'un adhésif ou d'une colle, par exemple du type polyuréthane, acrylique ou polypropylène.

De préférence, la couche support 1 est une couche de matière injectée, de préférence de matière plastique injecté, par exemple du type polypropylène.

De préférence, au moins la partie fonctionnelle 3a du ou d'au moins l'un des élément(s) fonctionnel(s) 3 peut être en contact surfacique direct :
- soit avec les faces internes 1b, 2b des couches support 1 et d'habillage 2 (forme non illustrée par les figures annexées),
- soit, tel que la forme illustrée sur les figures 1 à 5, avec la face interne 1b de la couche support 1 et la couche de liaison 4,
- soit avec la face interne 2b de la couche d'habillage 2 et la couche de liaison 4 (forme non illustrée par les figures annexées).

Dans une forme de réalisation préférentielle illustrée sur la figure 2, la couche d'habillage 2 peut comprendre une première couche, dite couche de décor 2c, comportant la face apparente 2a et une deuxième couche, dite couche de confort 2d, comportant la face interne 2b. On entend par couche de confort 2d une couche dont le ou les matériau(x) la constituant lui confère(nt) une constance souple, aisément déformable ou compressible. Ainsi, la couche d'habillage 2, qui pourrait comprendre au moins une autre couche entre les première et deuxième couches 2c, 2d, permet à l'utilisateur (occupant du véhicule) d'avoir un confort du toucher lors d'un appui sur la face apparente 2a, notamment dans une direction D sensiblement perpendiculaire à celle-ci du fait de la couche de confort 2d. De préférence, la couche de confort 2d peut être réalisée à partir d'une mousse, de préférence une mousse synthétique, préférentiellement de type polyuréthane, polyéthylène ou polypropylène.

La partie 3b de connexion ou de raccordement du ou d'au moins l'un des élément(s) fonctionnel(s) 3 traverse l'épaisseur de la couche support 1 au-delà de sa face externe 1a en étant noyée (ou encastré) dans ou enrobée par la couche support 1.

De préférence, la couche d'habillage 2 peut être réalisée à partir d'au moins un élément choisi dans le groupe des éléments comportant une peau synthétique ou naturelle, un film, une couche en matériau synthétique, métallique ou naturelle ou un textile.

La présente invention a également pour objet un procédé de réalisation d'une pièce de garniture intérieure pour véhicule, ladite pièce de garniture pouvant être une pièce de garniture telle que décrite précédemment. Plus particulièrement, dans une telle pièce de garniture la partie fonctionnelle 3a du ou d'au moins l'un des élément(s) fonctionnel(s) 3 est en contact surfacique direct avec la face interne 1b de la couche support 1 et soit avec la couche de liaison 4, soit avec la couche d'habillage 2.

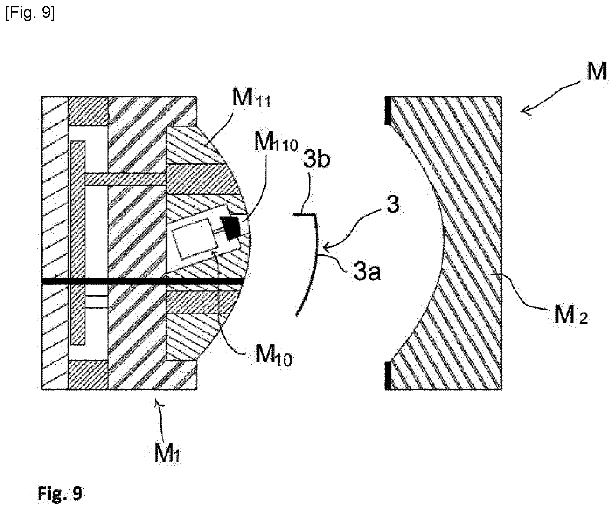

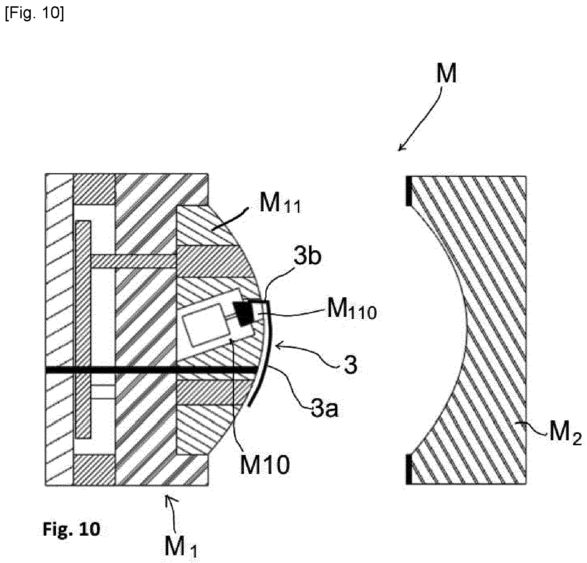

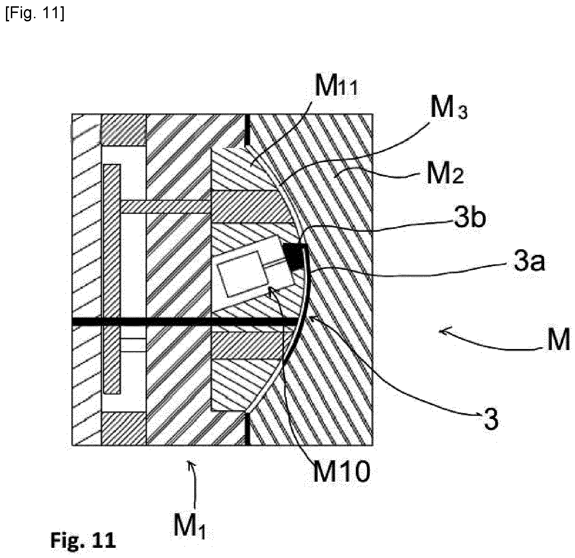

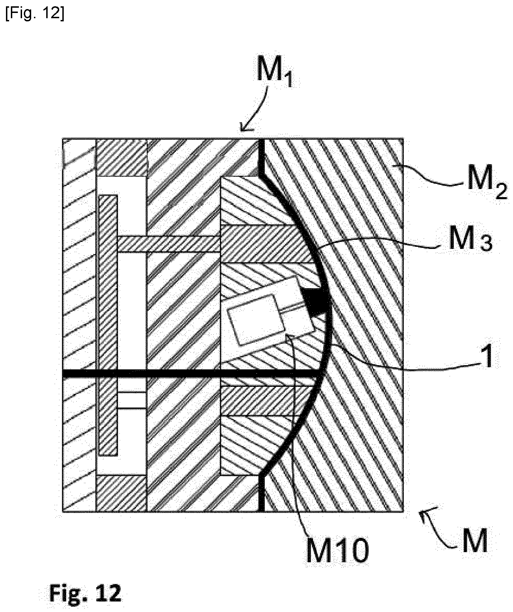

Conformément à la présente invention, le procédé se caractérise en ce qu'il consiste à réaliser les étapes suivantes, en utilisant un moule d'injection M comprenant deux parties M1, M2 mobiles l'une par rapport à l'autre, à savoir une première partie M1 pourvue de moyens d'injection M10 d'une matière destinée à former la couche support 1 et une deuxième partie M2 permettant de fermer le moule M :
i) fournir au moins un élément fonctionnel 3 (figure 9),
ii) mettre en place le ou chaque élément fonctionnel 3 dans le moule M en le maintenant dans une position prédéterminée dans la première partie M1 du moule M (figure 10),
iii) fermer le moule M, c'est à dire par rapprochement et contact mutuel des deux parties mobiles M1, M2, de manière à former une chambre d'injection M3 (figure 11) et à injecter dans cette dernière un matériau destiné à former la couche support 1 de sorte à fixer au moins la partie fonctionnelle 3a du ou de chaque élément fonctionnel 3 sur la surface de la couche support 1 destinée à former sa face interne 1b dans la pièce de garniture (figures 12),
iv) ouvrir le moule pour démouler et extraire la couche support 1 munie du ou des élément(s) fonctionnel(s) 3, avec la ou leur partie 3b allongée de connexion ou de raccordement traversant le matériau de la couche support 1 (figure 13),
v) fournir une couche d'habillage 2 et fixer cette dernière sur la couche support 1 au moyen d'une couche de liaison 4 de sorte que la couche d'habillage 2 recouvre au moins la partie fonctionnelle 3a du ou des éléments fonctionnels 3 et qu'au moins la partie fonctionnelle 3a du ou d'au moins l'un des élément(s) fonctionnel(s) 3 et soit située à l'extérieur de la couche de liaison 4 (figure 14).

De préférence, la couche de liaison 4 peut être une colle ou un adhésif. La colle ou l'adhésif, ou autre matière pouvant assurer la liaison et être étalée, peut être appliqué(e) sur la couche support 1 et/ou sur la couche d'habillage 2, et éventuellement sur la partie fonctionnelle 3a du ou d'au moins l'un des élément(s) fonctionnel(s) 3 :
- par étalement, par exemple au moyen d'un pinceau, d'un rouleau, ou
- par pulvérisation, par exemple à l'aide d'un pistolet.

L'étalement de la colle ou de l'adhésif peut être réalisé manuellement ou (automatiquement) à l'aide d'un robot.

La première partie M1 du moule M peut comprendre un poinçon M11 dans lequel peut être pratiquée la cavité étanche M110. Un tel moule est décrit par exemple dans le document FR2200727.

De préférence, dans l'étape ii), le procédé peut consister à mettre en place le ou chaque élément fonctionnel 3 dans le moule M en le maintenant dans une position prédéterminée dans la première partie M1 du moule M de telle manière qu'au moins une partie extrémale 33b de la partie 3b allongée de connexion ou de raccordement soit logée dans une cavité étanche M110 de la première partie M1 du moule, plus particulièrement du poinçon M11. Ainsi, dans l'étape iii) de fermeture du moule M, la ou leur partie 3b allongée de connexion ou de raccordement peut, dans une forme de réalisation préférentielle, se retrouver encastrée ou noyée dans la couche support 1 et la traverser à l'exception d'une partie comportant au moins la partie d'extrémité 32b. Au moins la partie d'extrémité 32b dépasse alors de la couche support 1, notamment de sa face externe 1a, à l'extérieur, afin de permettre aisément sa connexion ou son raccordement avec des moyens externes permettant son alimentation électrique et/ou la transmission de signaux électriques.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, qui est défini par les revendications annexées.

## Revendications

1. Pièce de garniture intérieure pour véhicule, ladite pièce de garniture présentant une forme tridimensionnelle et comprenant, d'une part, une structure multicouches comportant une couche support (1) présentant deux faces opposées, à savoir une face externe (1a) et une face interne (1b) et une couche d'habillage (2) rapportée et présentant deux faces opposées, à savoir une face externe (2a) définissant une face apparente de la pièce de garniture et une face interne (2b) tournée vers la face interne (1b) de la couche support (1) et, d'autre part, au moins un élément fonctionnel (3), de préférence d'épaisseur fine, comprenant une partie fonctionnelle (3a) d'extension surfacique disposée entre la couche support (1) et la couche d'habillage (2), la structure multicouches comportant en outre une couche de liaison (4) interposée entre la couche support (1) et la couche d'habillage (2) en étant fixée sur les faces internes (1b, 2b) de ces dernières de sorte à les assembler/lier entre elles, au moins la partie fonctionnelle (3a) du ou d'au moins l'un des élément(s) fonctionnel(s) (3) étant disposée et maintenue localement entre la couche d'habillage (2) et la couche support (1) en étant située à l'extérieur de la couche de liaison (4), **caractérisée en ce que** la partie fonctionnelle (3a) se prolonge de manière continue par une partie (3b) allongée de connexion ou de raccordement permettant son alimentation électrique et/ou la transmission de signaux électriques et **en ce que** la partie (3b) allongée de connexion ou de raccordement du ou d'au moins l'un des élément(s) fonctionnel(s) (3) traverse l'épaisseur de la couche support (1) au-delà de sa face externe (1a) en étant noyée dans ou enrobée par la couche support (1).

2. Pièce de garniture, selon la revendication 1, **caractérisée en ce que** la couche de liaison (4) est réalisée à partir d'un adhésif ou d'une colle.

3. Pièce de garniture, selon la revendication 1 ou 2, **caractérisée en ce que** la couche support (1) est une couche de matière injectée, de préférence de matière plastique injectée.

4. Pièce de garniture, selon l'une quelconque des revendications 1 à 3, **caractérisée en ce qu'**au moins la partie fonctionnelle (3a) du ou d'au moins l'un des élément(s) fonctionnel(s) (3) est en contact surfacique direct soit avec les faces internes (1b, 2b) des couches support (1) et d'habillage (2), soit avec la face interne (1b) de la couche support (1) et la couche de liaison (4), soit avec la face interne (2b) de la couche d'habillage (2) et la couche de liaison (4).

5. Pièce de garniture, selon l'une quelconque des revendications 1 à 4, **caractérisée en ce que** la couche d'habillage (2) comprend une première couche, dite couche de décor (2c), comportant la face apparente (2a) et une deuxième couche, dite couche de confort (2d), comportant la face interne (2b).

6. Pièce de garniture, selon la revendication 5, **caractérisée en ce que** la couche de confort (2d) est réalisée à partir d'une mousse, de préférence une mousse synthétique, préférentiellement de type polyuréthane, polyéthylène ou polypropylène.

7. Pièce de garniture, selon l'une quelconque des revendications 1 à 6, **caractérisée en ce que** la couche d'habillage (2) recouvre partiellement la couche support (1).

8. Pièce de garniture, selon la revendication 7, **caractérisée en ce que** la périphérie de la couche d'habillage (2) est matérialisée dans la couche support (1) par un aménagement, ou une caractéristique géométrique linéaire, (1c) en forme de creux, par exemple du type gorge, pratiqué(e) dans la face interne (1a) de la couche support (1) et recevant au moins le bord périphérique (2e) de la couche d'habillage (2).

9. Pièce de garniture, selon l'une quelconque des revendications 1 à 8, **caractérisée en ce que** la couche d'habillage (2) est réalisée à partir d'au moins un élément choisi dans le groupe des éléments comportant une peau synthétique ou naturelle, un film, une couche en matériau synthétique, métallique ou naturelle ou un textile.

10. Pièce de garniture, selon l'une quelconque des revendications 1 à 9, **caractérisée en ce que** la couche support (1) présente une structure alvéolaire intégrant, par exemple, des bulles d'air (1d) encapsulées permettant d'obtenir une conductivité thermique de la couche support (1) plus faible que celle de couche de la couche d'habillage (2).

11. Procédé de réalisation d'une pièce de garniture intérieure pour véhicule, ladite pièce de garniture présentant une forme tridimensionnelle et comprenant, d'une part, une structure multicouches comportant une couche support (1) présentant deux faces opposées, à savoir une face externe (1a) et une face interne (1b) et une couche d'habillage (2) rapportée et présentant deux faces opposées, à savoir une face externe (2a) définissant une face apparente de la pièce de garniture et une face interne (2b) tournée vers la face interne (1b) de la couche support (1) et, d'autre part, au moins un élément fonctionnel (3), de préférence d'épaisseur fine, comprenant une partie fonctionnelle (3a) d'extension surfacique disposée entre la couche support (1) et la couche d'habillage (2) et se prolongeant de manière continue par une partie (3b) allongée de connexion ou de raccordement permettant son alimentation électrique et/ou la transmission de signaux électriques, la structure multicouches comportant en outre une couche de liaison (4) interposée entre la couche support (1) et la couche d'habillage (2) en étant fixée sur les faces internes (1b, 2b) de ces dernières de sorte à les assembler/lier entre elles, au moins la partie fonctionnelle (3a) du ou d'au moins l'un des élément(s) fonctionnel(s) (3) étant disposée et maintenue localement entre la couche d'habillage (2) et la couche support (1) en étant située à l'extérieur de la couche de liaison (4), procédé **caractérisé en ce qu'**il consiste à réaliser les étapes suivantes, en utilisant un moule d'injection (M) comprenant deux parties (M1, M2) mobiles l'une par rapport à l'autre, à savoir une première partie (M1) pourvue de moyens d'injection (M10) d'une matière destinée à former la couche support (1) et une deuxième partie (M2) permettant de fermer le moule (M) :
- fournir au moins un élément fonctionnel (3),
- mettre en place le ou chaque élément fonctionnel (3) dans le moule (M) en le maintenant dans une position prédéterminée dans la première partie (M1) du moule (M),
- fermer le moule (M) de manière à former une chambre d'injection (M3) et à injecter dans cette dernière un matériau destiné à former la couche support (1) de sorte à fixer au moins la partie fonctionnelle (3a) du ou de chaque élément fonctionnel (3) sur la surface de la couche support (1) destinée à former sa face interne (1b) dans la pièce de garniture,
- ouvrir le moule (M) pour démouler et extraire la couche support (1) munie du ou des élément(s) fonctionnel(s) (3), avec la ou leur partie (3b) allongée de connexion ou de raccordement traversant le matériau de la couche support (1),
- fournir une couche d'habillage (2) et la fixer sur la couche support (1) au moyen d'une couche de liaison (4) de sorte que la couche d'habillage (2) recouvre au moins la partie fonctionnelle (3a) du ou des éléments fonctionnels (3) et qu'au moins la partie fonctionnelle (3a) du ou d'au moins l'un des élément(s) fonctionnel(s) (3) soit située à l'extérieur de la zone occupée par la couche de liaison (4).

12. Procédé, selon la revendication 11, **caractérisé en ce que** la couche de liaison (4) est une colle ou un adhésif appliqué(e) sur la couche support (1) et/ou sur la couche d'habillage (2), et éventuellement sur la partie fonctionnelle (3a) du ou d'au moins l'un des élément(s) fonctionnel(s) (3) par étalement, par exemple au moyen d'un pinceau ou d'un rouleau, ou par pulvérisation, par exemple à l'aide d'un pistolet ou d'une buse.

## Patentansprüche

1. Innenverkleidungsteil für ein Fahrzeug, wobei das Verkleidungsteil eine dreidimensionale Form aufweist und einerseits eine Mehrschichtstruktur umfasst, die eine Tragschicht (1), die zwei gegenüberliegende Seiten aufweist, nämlich eine Außenseite (1a) und eine Innenseite (1b), und eine angefügte Verkleidungsschicht (2), die zwei gegenüberliegende Seiten aufweist, nämlich eine Außenseite (2a), die eine sichtbare Seite des Verkleidungsteils definiert, und eine Innenseite (2b), die der Innenseite (1b) der Tragschicht (1) zugewandt ist, umfasst, und andererseits mindestens ein Funktionselement (3), vorzugsweise von geringer Dicke, das einen Funktionsteil (3a) mit flächiger Erstreckung umfasst, der zwischen der Tragschicht (1) und der Verkleidungsschicht (2) angeordnet ist, wobei die Mehrschichtstruktur außerdem eine Verbindungsschicht (4) umfasst, die zwischen der Tragschicht (1) und der Verkleidungsschicht (2) angeordnet ist, wobei sie an den Innenseiten (1b, 2b) dieser Letzteren so befestigt ist, dass sie sie zusammenfügt/miteinander verbindet, wobei wenigstens der Funktionsteil (3a) des Funktionselements oder wenigstens eines der Funktionselemente (3) zwischen der Verkleidungsschicht (2) und der Tragschicht (1) angeordnet ist und lokal gehalten wird, wobei er sich außerhalb der Verbindungsschicht (4) befindet, **dadurch gekennzeichnet, dass** der Funktionsteil (3a) stetig in einen lang gestreckten Verbindungs- oder Anschlussteil (3b) übergeht, der seine Stromversorgung und/oder die Übertragung elektrischer Signale ermöglicht, und dadurch, dass der lang gestreckte Verbindungs- oder Anschlussteil (3b) des Funktionselements oder wenigstens eines der Funktionselemente (3) die Dicke der Tragschicht (1) jenseits ihrer Außenseite (1a) durchquert, wobei er in die Tragschicht (1) eingebettet ist oder von ihr umhüllt wird.

2. Verkleidungsteil nach Anspruch 1, **dadurch gekennzeichnet, dass** die Verbindungsschicht (4) aus einem Klebstoff oder einem Leim hergestellt ist.

3. Verkleidungsteil nach Anspruch 1 oder 2, **dadurch gekennzeichnet, dass** die Tragschicht (1) eine Schicht aus gespritztem Material ist, vorzugsweise aus gespritztem Kunststoff.

4. Verkleidungsteil nach einem der Ansprüche 1 bis 3, **dadurch gekennzeichnet, dass** sich wenigstens der Funktionsteil (3a) des Funktionselements oder wenigstens eines der Funktionselemente (3) in direktem Oberflächenkontakt entweder mit den Innenseiten (1b, 2b) der Tragschicht (1) und der Verkleidungsschicht (2) oder mit der Innenseite (1b) der Tragschicht (1) und der Verbindungsschicht (4) oder mit der Innenseite (2b) der Verkleidungsschicht (2) und der Verbindungsschicht (4) befindet.

5. Verkleidungsteil nach einem der Ansprüche 1 bis 4, **dadurch gekennzeichnet, dass** die Verkleidungsschicht (2) eine erste Schicht, Dekorschicht (2c) genannt, welche die sichtbare Seite (2a) aufweist, und eine zweite Schicht, Komfortschicht (2d) genannt, welche die Innenseite (2b) aufweist, umfasst.

6. Verkleidungsteil nach Anspruch 5, **dadurch gekennzeichnet, dass** die Komfortschicht (2d) aus einem Schaumstoff hergestellt ist, vorzugsweise einem synthetischen Schaumstoff, bevorzugt vom Typ Polyurethan, Polyethylen oder Polypropylen.

7. Verkleidungsteil nach einem der Ansprüche 1 bis 6, **dadurch gekennzeichnet, dass** die Verkleidungsschicht (2) die Tragschicht (1) teilweise bedeckt.

8. Verkleidungsteil nach Anspruch 7, **dadurch gekennzeichnet, dass** der Randbereich der Verkleidungsschicht (2) in der Tragschicht (1) durch eine Gestaltung, oder ein lineares geometrisches Merkmal, (1c) in Form einer Vertiefung, zum Beispiel vom Typ einer Auskehlung, angeordnet ist, die in der Innenseite (1a) der Tragschicht (1) ausgebildet ist und mindestens den Umfangsrand (2e) der Verkleidungsschicht (2) aufnimmt.

9. Verkleidungsteil nach einem der Ansprüche 1 bis 8, **dadurch gekennzeichnet, dass** die Verkleidungsschicht (2) aus mindestens einem Element hergestellt ist, das aus der Gruppe der Elemente ausgewählt ist, die eine synthetische oder natürliche Haut, einen Film, eine Schicht aus synthetischem, metallischem oder natürlichem Material oder ein Textilmaterial umfasst.

10. Verkleidungsteil nach einem der Ansprüche 1 bis 9, **dadurch gekennzeichnet, dass** die Tragschicht (1) eine Wabenstruktur aufweist, in die zum Beispiel eingekapselte Luftbläschen (1d) integriert sind, die es ermöglichen, eine Wärmeleitfähigkeit der Tragschicht (1) zu erhalten, die niedriger als diejenige der Verkleidungsschicht (2) ist.

11. Verfahren zur Herstellung eines Innenverkleidungsteils für ein Fahrzeug, wobei das Verkleidungsteil eine dreidimensionale Form aufweist und einerseits eine Mehrschichtstruktur umfasst, die eine Tragschicht (1), die zwei gegenüberliegende Seiten aufweist, nämlich eine Außenseite (1a) und eine Innenseite (1b), und eine angefügte Verkleidungsschicht (2), die zwei gegenüberliegende Seiten aufweist, nämlich eine Außenseite (2a), die eine sichtbare Seite des Verkleidungsteils definiert, und eine Innenseite (2b), die der Innenseite (1b) der Tragschicht (1) zugewandt ist, umfasst, und andererseits mindestens ein Funktionselement (3), vorzugsweise von geringer Dicke, das einen Funktionsteil (3a) mit flächiger Erstreckung umfasst, der zwischen der Tragschicht (1) und der Verkleidungsschicht (2) angeordnet ist und stetig in einen lang gestreckten Verbindungs- oder Anschlussteil (3b) übergeht, der seine Stromversorgung und/oder die Übertragung elektrischer Signale ermöglicht, wobei die Mehrschichtstruktur außerdem eine Verbindungsschicht (4) umfasst, die zwischen der Tragschicht (1) und der Verkleidungsschicht (2) angeordnet ist, wobei sie an den Innenseiten (1b, 2b) dieser Letzteren so befestigt ist, dass sie sie zusammenfügt/miteinander verbindet, wobei wenigstens der Funktionsteil (3a) des Funktionselements oder wenigstens eines der Funktionselemente (3) zwischen der Verkleidungsschicht (2) und der Tragschicht (1) angeordnet ist und lokal gehalten wird, wobei er sich außerhalb der Verbindungsschicht (4) befindet, wobei das Verfahren **dadurch gekennzeichnet ist, dass** es darin besteht, die folgenden Schritte auszuführen, unter Verwendung einer Spritzform (M), die zwei relativ zueinander bewegliche Teile (M1, M2) umfasst, nämlich einen ersten Teil (M1), der mit Mitteln zum Spritzen (M10) eines Materials versehen ist, das dazu bestimmt ist, die Tragschicht (1) zu bilden, und einen zweiten Teil (M2), der es ermöglicht, die Form (M) zu schließen:
- Bereitstellen mindestens eines Funktionselements (3),
- Anordnen des oder jedes Funktionselements (3) in der Form (M), wobei es in einer vorbestimmten Position im ersten Teil (M1) der Form (M) gehalten wird,
- Schließen der Form (M), um eine Einspritzkammer (M3) zu bilden und um in diese Letztere ein Material einzuspritzen, das dazu bestimmt ist, die Tragschicht (1) zu bilden, derart, dass wenigstens der Funktionsteil (3a) des oder jedes Funktionselements (3) auf der Fläche der Tragschicht (1) befestigt wird, die dazu bestimmt ist, ihre Innenseite (1b) in dem Verkleidungsteil zu bilden,
- Öffnen der Form (M), um die mit dem oder den Funktionselement(en) (3) ausgestattete Tragschicht (1) zu entformen und herauszunehmen, mit dem oder ihrem lang gestreckten Verbindungs- oder Anschlussteil (3b), welches das Material der Tragschicht (1) durchquert,
- Bereitstellen einer Verkleidungsschicht (2) und Befestigen derselben auf der Tragschicht (1) mittels einer Verbindungsschicht (4), derart, dass die Verkleidungsschicht (2) wenigstens den Funktionsteil (3a) des Funktionselements oder der Funktionselemente (3) bedeckt und dass wenigstens der Funktionsteil (3a) des Funktionselements oder wenigstens eines der Funktionselemente (3) sich außerhalb des von der Verbindungsschicht (4) eingenommenen Bereichs befindet.

12. Verfahren nach Anspruch 11, **dadurch gekennzeichnet, dass** die Verbindungsschicht (4) ein Leim oder ein Klebstoff ist, der auf die Tragschicht (1) und/oder auf die Verkleidungsschicht (2) und eventuell auf den Funktionsteil (3a) des Funktionselements oder wenigstens eines der Funktionselemente (3) durch Verstreichen, zum Beispiel mittels eines Pinsels oder einer Walze, oder durch Zerstäubung, zum Beispiel mithilfe einer Pistole oder einer Düse, aufgebracht wird.

## Claims

1. Inner trim component for a vehicle, said trim component having a three-dimensional shape and comprising, on the one hand, a multilayer structure having a support layer (1) that has two opposite faces, namely an external face (1a) and an internal face (1b), and an added cladding layer (2) that has two opposite faces, namely an external face (2a) defining a visible face of the trim component and an internal face (2b) turned towards the internal face (1b) of the support layer (1), and, on the other hand, at least one functional element (3), preferably of small thickness, comprising a functional part (3a) of surface extension that is disposed between the support layer (1) and the cladding layer (2), the multilayer structure also having a connecting layer (4) interposed between the support layer (1) and the cladding layer (2), being fastened to the internal faces (1b, 2b) of the latter so as to join/connect them to each other, at least the functional part (3a) of the or of at least one of the functional element(s) (3) being disposed and held locally between the cladding layer (2) and the support layer (1), being situated outside the connecting layer (4), **characterized in that** the functional part (3a) is extended continuously by an elongate connection or linking part (3b) allowing the electrical supply thereof and/or the transmission of electrical signals, and **in that** the elongate connection or linking part (3b) of the or of at least one of the functional element(s) (3) passes through the thickness of the support layer (1) beyond the external face (1a) thereof, being embedded in or coated by the support layer (1).

2. Trim component according to Claim 1, **characterized in that** the connecting layer (4) is made from an adhesive or a glue.

3. Trim component according to Claim 1 or 2, **characterized in that** the support layer (1) is a layer of injected material, preferably of injected plastic material.

4. Trim component according to any one of Claims 1 to 3, **characterized in that** at least the functional part (3a) of the or of at least one of the functional element (s) (3) is in direct surface contact either with the internal faces (1b, 2b) of the support (1) and cladding (2) layers, or with the internal face (1b) of the support layer (1) and the connecting layer (4), or with the internal face (2b) of the cladding layer (2) and the connecting layer (4).

5. Trim component according to any one of Claims 1 to 4, **characterized in that** the cladding layer (2) comprises a first layer, referred to as decorative layer (2c), which has the visible face (2a), and a second layer, referred to as comfort layer (2d), which has the internal face (2b).

6. Trim component according to Claim 5, **characterized in that** the comfort layer (2d) is made from a foam, preferably a synthetic foam, preferentially of polyurethane, polyethylene or polypropylene type.

7. Trim component according to any one of Claims 1 to 6, **characterized in that** the cladding layer (2) partially covers the support layer (1).

8. Trim component according to Claim 7, **characterized in that** the periphery of the cladding layer (2) is materialized in the support layer (1) by an arrangement, or a linear geometric feature (1c), in the form of a recess, for example of the groove type, made in the internal face (1a) of the support layer (1) and receiving at least the peripheral edge (2e) of the cladding layer (2).

9. Trim component according to any one of Claims 1 to 8, **characterized in that** the cladding layer (2) is made from at least one element chosen from the group of elements comprising a synthetic or natural skin, a film, a layer of synthetic, metallic or natural material or a textile.

10. Trim component according to any one of Claims 1 to 9, **characterized in that** the support layer (1) has a cellular structure incorporating, for example, encapsulated air bubbles (1d) that make it possible to obtain a thermal conductivity of the support layer (1) that is lower than that of the cladding layer (2).

11. Method for producing an inner trim component for a vehicle, said trim component having a three-dimensional shape and comprising, on the one hand, a multilayer structure having a support layer (1) that has two opposite faces, namely an external face (1a) and an internal face (1b), and an added cladding layer (2) that has two opposite faces, namely an external face (2a) defining a visible face of the trim component and an internal face (2b) turned towards the internal face (1b) of the support layer (1), and, on the other hand, at least one functional element (3), preferably of small thickness, comprising a functional part (3a) of surface extension that is disposed between the support layer (1) and the cladding layer (2) and is extended continuously by an elongate connection or linking part (3b) allowing the electrical supply thereof and/or the transmission of electrical signals, the multilayer structure also having a connecting layer (4) interposed between the support layer (1) and the cladding layer (2), being fastened to the internal faces (1b, 2b) of the latter so as to join/connect them to each other, at least the functional part (3a) of the or of at least one of the functional element(s) (3) being disposed and held locally between the cladding layer (2) and the support layer (1), being situated outside the connecting layer (4), which method is **characterized in that** it consists in carrying out the following steps, using an injection mould (M) comprising two parts (M1, M2) that are able to move relative to one another, namely a first part (M1) provided with means for injecting (M10) a material intended to form the support layer (1) and a second part (M2) that makes it possible to close the mould (M):
- providing at least one functional element (3),
- putting the or each functional element (3) in place in the mould (M), holding it in a predetermined position in the first part (M1) of the mould (M),
- closing the mould (M) so as to form an injection chamber (M3) and to inject into the latter a material intended to form the support layer (1) so as to fasten at least the functional part (3a) of the or of each functional element (3) to the surface of the support layer (1) that is intended to form the internal face (1b) thereof in the trim component,
- opening the mould (M) in order to demould and extract the support layer (1) provided with the one or more functional element(s) (3), with the or their elongate connection or linking part (3b) passing through the material of the support layer (1),
- providing a cladding layer (2) and fastening it to the support layer (1) by means of a connecting layer (4) such that the cladding layer (2) covers at least the functional part (3a) of the one or more functional elements (3) and that at least the functional part (3a) of the or of at least one of the functional element(s) (3) is situated outside the zone occupied by the connecting layer (4).

12. Method according to Claim 11, **characterized in that** the connecting layer (4) is a glue or an adhesive applied to the support layer (1) and/or to the cladding layer (2), and optionally to the functional part (3a) of the or of at least one of the functional element (s) (3) by spreading, for example by means of a brush or a roller, or by spraying, for example using a gun or a nozzle.
